# EUROPEAN PATENT APPLICATION

(11) **EP 3 202 618 A1**
(43) Date of publication of application: **09.08.2017**
(21) Application number: 16154463.0
(22) Date of filing: 05.02.2016
(51) Int. Cl.: B60N 2/68, B64D 11/06, B29C 51/00

(54) **PASSENGER SEATBACK ASSEMBLY WITH THERMOPLASTIC ELEMENTS**

(71) Applicant: B/E Aerospace, Inc., Wellington, FL 33414 (US)
(72) Inventor: MCKIBBIN, Nigel, KILKEEL, NEWRY, Down BT34 4NG (GB); PHILLIPS, Alan, BALLYNAHNICH, Down BT24 8XU (GB); MALATESTA, Paolo, 60038 SAN PAOLO DI JESI (IT); AMMICUCCI, Lorenzo, 60038 SAN PAOLO DI JESI (IT)
(74) Representative: Algemeen Octrooi- en Merkenbureau B.V.

(57) **Abstract**

A thermoplastic seatback for a passenger seat includes a thermoplastic peripheral structural frame for attachment to a seat assembly and a thermoplastic diaphragm overmolded onto a forward face of the frame. An aircraft passenger seat and a method of constructing a passenger seatback is also disclosed.

The invention is related to a thermoplastic seatback for a passenger seat, comprising a thermoplastic peripheral structural frame for attachment to a seat assembly and a thermoplastic diaphragm overmolded onto a forward face of the frame. The invention further relates to an aircraft passenger seat and to a method of constructing a seatback for a passenger seat.

## Description

### Technical Field and Background of the Invention

According to a first aspect, this invention relates to a seatback for a passenger seat. Current practice includes traditional continuous carbon fiber hand layup techniques using bladder molding and carbon prepreg, mostly using unidirectional tape/continuous fiber materials. The current technology has health and safety concerns due to the splintering of the current traditional hand layup materials, which can potentially injure nearby personnel. This manufacturing technique also suffers from inconsistent processing and returns inconsistent structural performance of the part. This process also requires post mold machining for holes and the like.

It is an object of the invention to provide a seatback which, compared to known seatbacks, offers the opportunity of cost savings because of lower production cost and/or fuel cost by weight savings when used in an aircraft. This object is met by a thermoplastic seatback according to claim 1.

The current invention provides a seat having a seatback assembly with thermoplastic elements enabling to provide several advantages over current seatback construction practices. The novel features of this invention have particular application in the technical design and manufacture of aircraft passenger seats, where even small savings in weight are important over the life of the seats in aircraft fuel consumption reduction. The thermoplastic seatback of the invention may be manufactured using injection molding.

Fabrication of the thermoplastic parts of the seatback preferably use an injection molding process and thermoplastic materials which have not been used for components as large and as heavily loaded as the seatback components described in this application. The injection molding process used to fabricate the seatback provides enhanced overall final quality and reduced cost while maintaining structural performance similar and equivalent to carbon fiber and metal/fabric seat components. When the seatback has reached the end of its useful life, the thermoplastic components can be recycled, further enhancing the cost-effectiveness of the process and resulting product.

### Summary of the Invention

According to a second aspect, it is therefore an object of the present invention to provide a method of constructing a seatback assembly that includes cheaper and easier to manufacture elements.

It is another object of the invention to provide a method of constructing a seatback assembly that utilizes such elements to provide improved quality.

It is another object of the invention to provide a method of constructing a seatback assembly that utilizes such elements to reduce the cost of manufacture.

According to the second aspect, it is another object of the invention to provide a method of constructing a seatback assembly that utilizes such elements with structural performance characteristics similar and equivalent to carbon fiber and metal/fabric seat components.

One or more of the above objects is met by a method of constructing a seatback assembly according to independent claim 12.

According to a third aspect, it is another object of the invention to provide a passenger seat having a seatback, the seat, compared to known seats, offers the opportunity of cost savings because of lower production cost and/or fuel cost by weight savings when used in an aircraft. This object is met by a seat according to independent claim 8.

These and other objects and advantages of the invention are achieved by providing a thermoplastic seatback for a passenger seat that includes a thermoplastic peripheral structural frame for attachment to a seat assembly and a thermoplastic diaphragm overmolded onto a forward face of the frame.

According to another embodiment of the invention, the thermoplastic material of the frame is carbon fiber reinforced polyether ether Ketone (PEEK).

According to another embodiment of the invention, the thermoplastic material of the diaphragm is polyethylenimine (PEI) reinforced glass fiber.

According to another embodiment of the invention, the thermoplastic material of the frame is carbon fiber reinforced polyether ether Ketone (PEEK) and the thermoplastic material of the diaphragm is polyethylenimine (PEI) reinforced glass fiber.

According to another embodiment of the invention, the frame is formed of two injection-molded halves joined together to form a unitary frame structure.

According to another embodiment of the invention, the injection-molded frame halves comprise an aft section and a forward section.

According to another embodiment of the invention, the two injection-molded frame halves are joined together by friction-welding.

According to another embodiment of the invention, an aircraft passenger seat is provided that includes a seat base, a seat bottom carried on the seat base and at least one armrest and a seatback mounted on the seat base aft of the seat bottom. The seatback includes a thermoplastic peripheral structural frame for attachment to a seat assembly and a thermoplastic diaphragm overmolded onto a forward face of the frame.

According to another embodiment of the invention, a method of constructing a seatback for a passenger seat is provided that includes the steps of forming a thermoplastic peripheral structural frame for attachment to a seat assembly, thermoforming a thermoplastic diaphragm; and overmolding the diaphragm onto a forward face of the frame.

According to another embodiment of the method, the step of forming the frame includes the steps of separately forming an aft frame section and a forward frame section and thereafter joining the aft frame section and forward frame section to form a unitary frame structure.

According to another embodiment of the method, the step of joining the aft frame section and forward frame section comprises friction-welding.

### Brief Description of the Drawing Figures

The present invention is best understood when the following detailed description of the invention is read with reference to the accompanying drawings, in which:
Figure 1 is a front perspective view of a pair of aircraft passenger seats of the type in which a seatback according to the present invention may be used;
Figure 2 is a fragmentary exploded rear perspective view of a seatback fabricated of thermoplastic elements in accordance with an embodiment of the invention;
Figure 3 is a fragmentary side elevation of the seatback shown in Figure 2;
Figure 4 is a rear elevation of the seatback shown in Figure 2;
Figure 5 is a rear perspective view of the seatback shown in Figure 2; and
Figure 6 is a front perspective view of the seatback shown in Figure 2.

### Detailed Description of the Preferred Embodiment

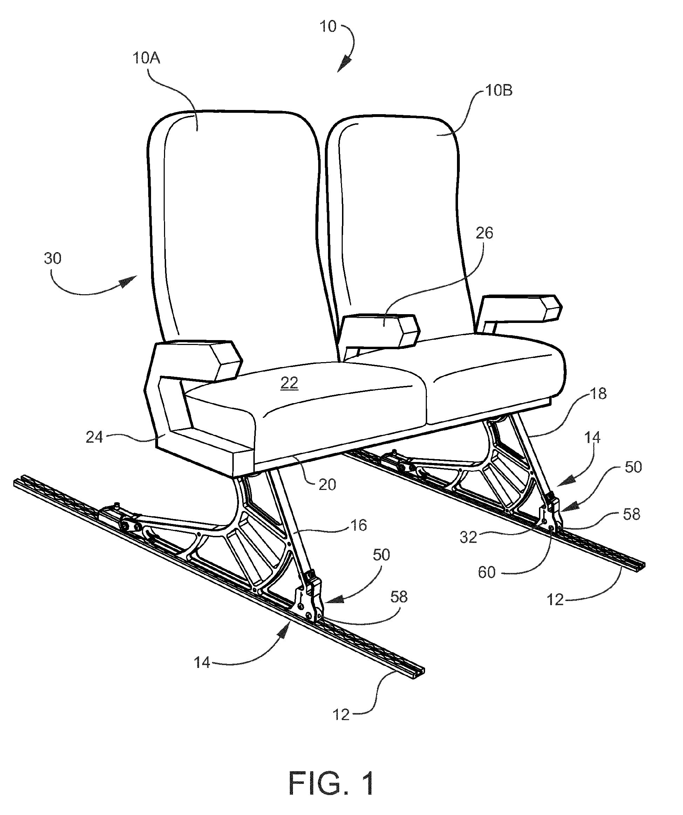

Referring now specifically to the drawings wherein identical reference numerals denote the same elements within and among the various views, a typical seating arrangement incorporating a seatback assembly according to the present invention is illustrated in Figure 1. A seating unit 10 is provided that includes two side adjacent seats 10A, 10B positioned on locking tracks 12 and secured by means of track fastener assemblies 14 mounted on the front end of the seat legs 16, 18. The seat 10A includes a base 20 that supports a seat bottom 22, including cushioning and a dress cover, an aisle armrest 24 and a center armrest 26 shared with seat 10B. A seatback 30, including cushioning and a dress cover, is conventionally-mounted aft of the seat bottom 22. Seat 10B includes the same elements.

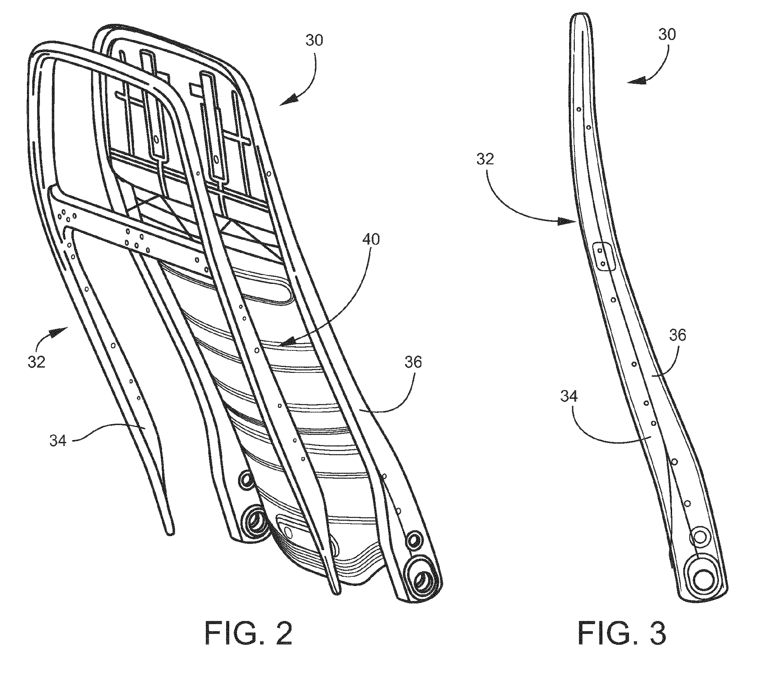

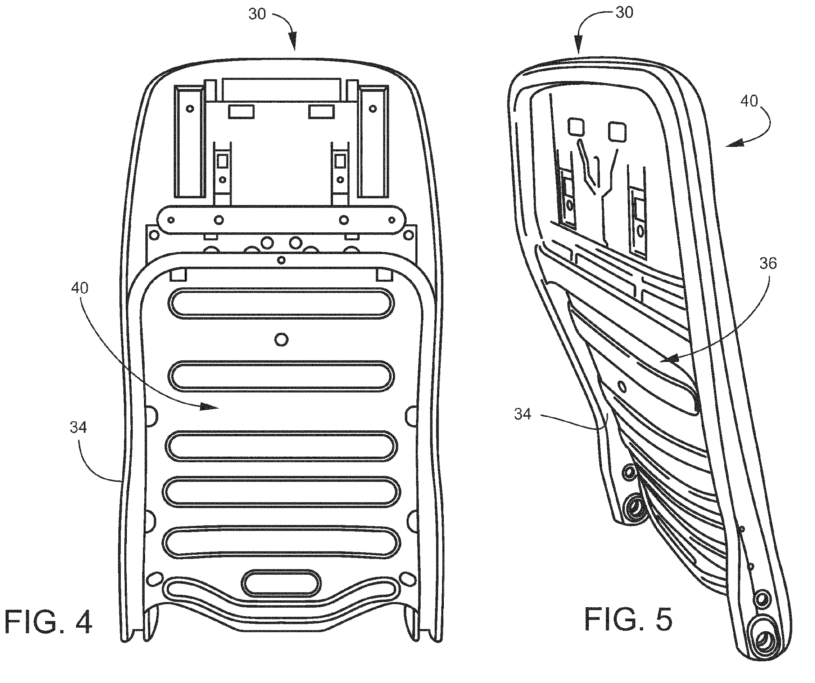

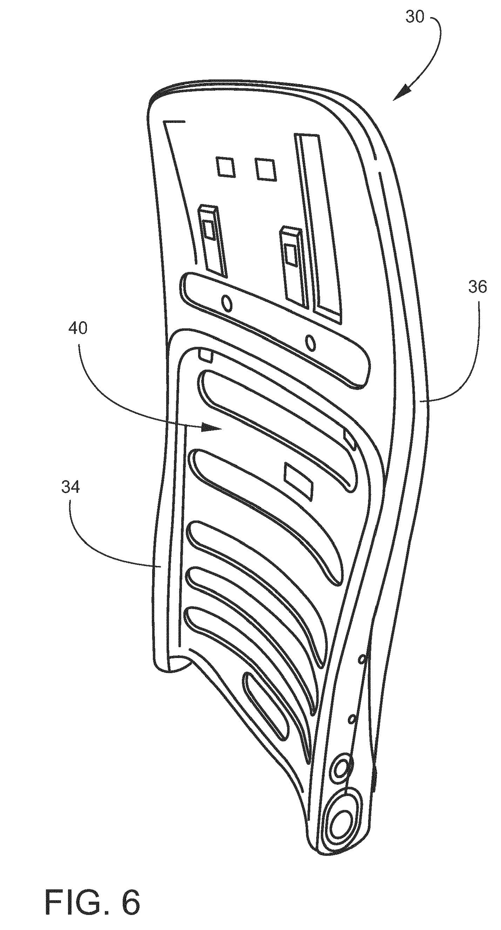

Referring now to Figures 2-6, the seatback 30 is shown, and includes a peripheral structural frame 32 preferably formed of two part short fiber Carbon fiber reinforced Polyether ether Ketone (PEEK) thermoplastic material. The frame 32 is injection molded in two halves-an aft section 34 and a forward section 36, and is preferably friction-welded together to form the unitary structure shown in Figures 3-7. Friction-welding refers generally a solid-state welding process that generates heat through mechanical friction between workpieces in relative motion to one another, with the addition of a lateral "upset" force to plastically displace and fuse the materials. The process is particularly useful in fusing thermoplastics given the relatively low melting point of most thermoplastic materials. Of course, other known processes, for example sonic welding, may be used to join the frame halves. Alternatively, the frame 32 can be fabricated using other suitable techniques.

The diaphragm 40 is preferably fabricated of consolidated Polyethylenimine (PEI) reinforced glass fiber. The PEI diaphragm 40 is thermoformed and then overmolded onto the forward face of the forward frame section 36. Using this process avoids the need for a secondary attachment technique.

The use of an injection molding process and thermoplastic material have not heretofore been used for components as large as these seat components and that are as heavily loaded. The injection molding process provides overall final quality and reduced cost while maintaining similar structural performance. The process of overmolding PEEK and PEI has not been carried out before and the process carried out to produce the seatback 30 demonstrates that this new process achieves suitable results. The use of a friction-welding process also gives the feel of a 'traditional' seatback as well as giving a closed box section useful for maintaining structural integrity combined with light weight and a degree of flexibility. Another benefit of this process is that the wall thickness of the head pan is less than the thickness recommendations of the material supplier with no loss of structural integrity or other performance characteristics. When the seatback has reached the end of its useful life, the thermoplastic components can be recycled, further enhancing the cost-effectiveness of the process and resulting product.

A thermoplastic seatback, a seat having a thermoplastic seatback, and a method of fabricating a thermoplastic seatback according to preferred embodiments of the invention have been described with reference to specific embodiments and examples. Various details of the invention may be changed without departing from the scope of the invention. Furthermore, the foregoing description of the preferred embodiments of the invention and best mode for practicing the invention are provided for the purpose of illustration only and not for the purpose of limitation, the invention being defined by the claims.

## Claims

1. A thermoplastic seatback for a passenger seat, comprising:
(a) a thermoplastic peripheral structural frame for attachment to a seat assembly; and
(b) a thermoplastic diaphragm overmolded onto a forward face of the frame.

2. A thermoplastic seatback for a passenger seat according to claim 1, wherein the thermoplastic material of the frame comprises carbon fiber reinforced polyether ether Ketone (PEEK).

3. A thermoplastic seatback for a passenger seat according to claim 1, wherein the thermoplastic material of the diaphragm comprises polyethylenimine (PEI) reinforced glass fiber.

4. A thermoplastic seatback for a passenger seat according to claim 1, wherein the thermoplastic material of the frame comprises carbon fiber reinforced polyether ether Ketone (PEEK) and the thermoplastic material of the diaphragm comprises polyethylenimine (PEI) reinforced glass fiber.

5. A thermoplastic seatback for a passenger seat according to claim 1, wherein the frame is formed of two injection-molded halves joined together to form a unitary frame structure.

6. A thermoplastic seatback for a passenger seat according to claim 5, wherein the injection-molded frame halves comprise an aft section and a forward section.

7. A thermoplastic seatback for a passenger seat according to claim 5, wherein the two injection-molded frame halves are joined together by friction-welding.

8. An aircraft passenger seat, comprising:
(a) a seat base, a seat bottom carried on the seat base and at least one armrest;
(b) a seatback mounted on the seat base aft of the seat bottom, and comprising:
(i) a thermoplastic peripheral structural frame for attachment to a seat assembly; and
(ii) a thermoplastic diaphragm overmolded onto a forward face of the frame.

9. An aircraft passenger seat according to claim 8, wherein the seatback is a thermoplastic seatback for a passenger seat according to one or more of claims 1-7.

10. An aircraft passenger seat according to claim 8, wherein the thermoplastic material of the frame comprises carbon fiber reinforced polyether ether Ketone (PEEK) and the thermoplastic material of the diaphragm comprises polyethylenimine (PEI) reinforced glass fiber.

11. An aircraft passenger seat according to claim 8, wherein the thermoplastic material of the frame comprises carbon fiber reinforced polyether ether Ketone (PEEK) and the thermoplastic material of the diaphragm comprises polyethylenimine (PEI) reinforced glass fiber, the frame is formed of two injection-molded halves joined together to form a unitary frame structure, and the two injection-molded frame halves are joined together by friction-welding.

12. A method of constructing a seatback for a passenger seat, comprising the steps of:
(a) forming a thermoplastic peripheral structural frame for attachment to a seat assembly;
(b) thermoforming a thermoplastic diaphragm; and
(c) overmolding the diaphragm onto a forward face of the frame.

13. A method according to claim 12, wherein step of forming the frame includes the steps of separately forming an aft frame section and a forward frame section and thereafter joining the aft frame section and forward frame section to form a unitary frame structure.

14. A method according to claim 13, wherein the step of joining the aft frame section and forward frame section comprises friction-welding.
